# EUROPEAN PATENT SPECIFICATION

(11) **EP 0 416 178 B1**
(45) Date of publication and mention of the grant of the patent: **08.03.1995**
(21) Application number: 89309033.2
(22) Date of filing: 06.09.1989
(51) Int. Cl.: F16D 27/112

(54) **Electromagnetic clutch**
Elektromagnetische Kupplung
Embrayage électromagnétique

(43) Date of publication of application: 13.03.1991
(73) Proprietor: Shinko Electric Co. Ltd., Chuo-ku Tokyo (JP)
(72) Inventor: Nakamura, Hiroaki c/o Shinko Electric Co. Ltd., Ise-shi Mie-ken (JP)
(74) Representative: Calderbank, Thomas Roger

(56) References cited:
- FR-A- 1 122 908
- GB-A- 921 683
- GB-A- 1 112 175
- GB-A- 1 129 661
- US-A- 2 488 552
- US-A- 2 490 044
- US-A- 2 703 378
- US-A- 3 016 118
- US-A- 3 158 242
- US-A- 3 292 756
- US-A- 3 422 942
- US-A- 4 487 174

## Description

The present invention pertains to an electromagnetic clutch and particularly to a microclutch suitable for use in office automation or factory automation equipment.

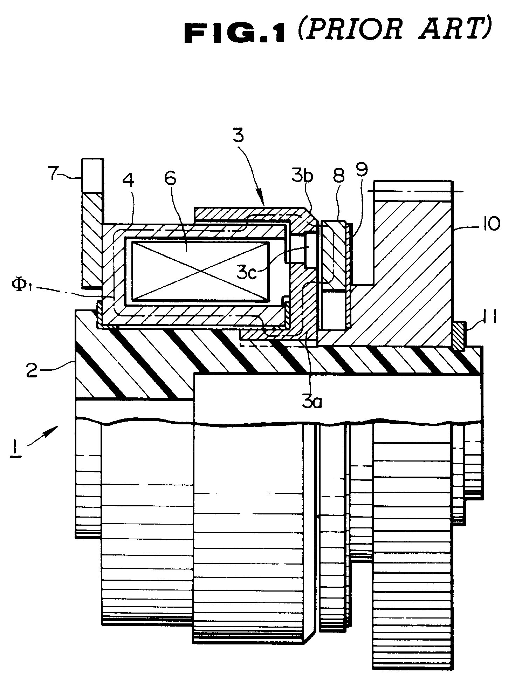

Fig. 1 depicts a conventional electromagnetic microclutch of the aforementioned type. The electromagnetic clutch, generally designated by 1, comprises a hollow cylindrical rotor shaft 2 formed of a synthetic resin by integral molding. The rotor shaft 2 has an annular rotor 3 of a shallow channell-shaped cross-section securely mounted therearound. The rotor 3 has inner and outer circumferential magnetic poles 3a and 3b isolated from each other by through-grooves 3c. An annular yoke 4 of a deep channell-shaped cross-section is rotatably mounted on the rotor shaft 2 so as to be positioned on the left side in Fig. 1 with respect to the rotor 3. The yoke 4 holds a coil 6 therein and has a yoke-locking plate 7 securely fixed thereto. The yoke locking plate 7 is supported by equipment to which the clutch is mounted, and is kept stationary, so that the yoke 4 is prevented from accompanying the rotor shaft 2 when the latter is rotated. A gear 10 rotatably fits around the rotor shaft 2 and is prevented from axial movement by both the boss of the rotor shaft 2 and a retaining ring 11 mounted to the rotor shaft 2. A ring-shaped armature 8 is fixed to the gear 10 through an annular spring plate 9 so that one face thereof faces to the inner and outer magnetic poles 3a and 3b, leaving a small gap.

With such a construction, the armature 8 is rotated together with the gear 10 when a rotation force is transmitted from a motor (not shown) to the gear 10. During the rotation of the armature 8, the coil 6 is energized for magnetizing the yoke 4, so that a magnetic flux passes through the yoke 4, the inner circumferential magnetic pole 3a of the rotor 3, the armature 8, and the outer circumferential magnetic pole 3b, and then returns to the yoke 4, thus forming a magnetic path Φ₁. The armature 8 is hence brought into contact with the rotor 3 by magnetic attraction counter to the resilient force exerted by the spring plate 9, so that the rotor shaft 2 and hence an output shaft of the equipment are rotated.

The above-described electromagnetic clutch, however, has a number of problems, including:
(a) It has been difficult to accurately produce the yoke 4 by pressing since its cross-sectional configuration is of a deep channel shape.
(b) The two magnetic poles magnetically isolated from each other must be formed on the rotor 3. Therefore, the manufacture of the conventional electromagnetic clutch has been complicated and expensive.
(c) It has been very difficult to make the gap between the armature 8 and the inner circumferential magnetic pole 3a equal to that between the armature 8 and the outer circumferential magnetic pole 3b. Consequently, one of the gaps becomes larger, and the magnetic flux consumption tends to increase.
(d) Since the coil 6, the rotor 3 and the armature 8 are arranged in line in an axial direction, the resulting clutch is therefore relatively long in the axial direction. This results in unfavourable circumstances when mounting the clutch in equipment.

The present invention therefore seeks to provide an electromagnetic clutch which can be manufactured easily while permitting the use of parts of a simple construction, and which is relatively short in the axial direction.

In US-A-2703378 there is discussed an electromagnetic clutch with a rotor, a coil, an armature, an armature hub and a yoke. The armature and the yoke form a magnetic path which, when the coil is energized, causes attraction of the armature to the rotor. The coil is disposed around the rotor, and the armature hub is suggested for rotation with the rotor. Thus this document corresponds to the pre-characterising part of claim 1.

According to the present invention, there is provided an electromagnetic clutch comprising a rotor having an axis of rotation and having a cylindrical wall extending axially thereof, a coil, an armature, and a yoke; said rotor, said armature and said yoke being arranged to form a magnetic path (Φ) so that when said coil is energized, said armature is electromagnetically attracted to said rotor;
wherein an armature hub is rotatably disposed so as to be coaxial with said rotor, said armature being disposed in opposed relation to one axial end of the cylindrical wall of said rotor and being supported by said armature hub for rotation therewith, said coil being disposed around said cylindrical wall of said rotor, said one axial end of said cylindrical wall of said rotor serving as a single magnetic pole for forming said magnetic path (Φ);
the armature being supported on the armature hub so as to be moveable, in response to magnetic attraction, towards and away from said one end of said cylindrical wall of said rotor;
wherein;
the yoke encloses the cylindrical wall and the armature both circumferentially and axially, so that an axial line through said one end of the cylindrical wall intersects the yoke beyond each axial end of the cylindrical wall.

Embodiments of the present invention will now be described, by way of example, with reference to the accompanying drawings, in which:
Fig. 1 is a side elevation, partly in radial section, of a conventional electromagnetic clutch;
Fig. 2 is a side elevation, partly in radial section, of an electromagnetic clutch in accordance with the present invention;
Fig. 3 is a front view of an armature used in the clutch of Fig. 2;
Fig. 4 is an enlarged view of the encircled portion designated by IV in Fig. 2; and
Fig. 5 is a view similar to Fig. 2, but showing a modified clutch in accordance with the invention.

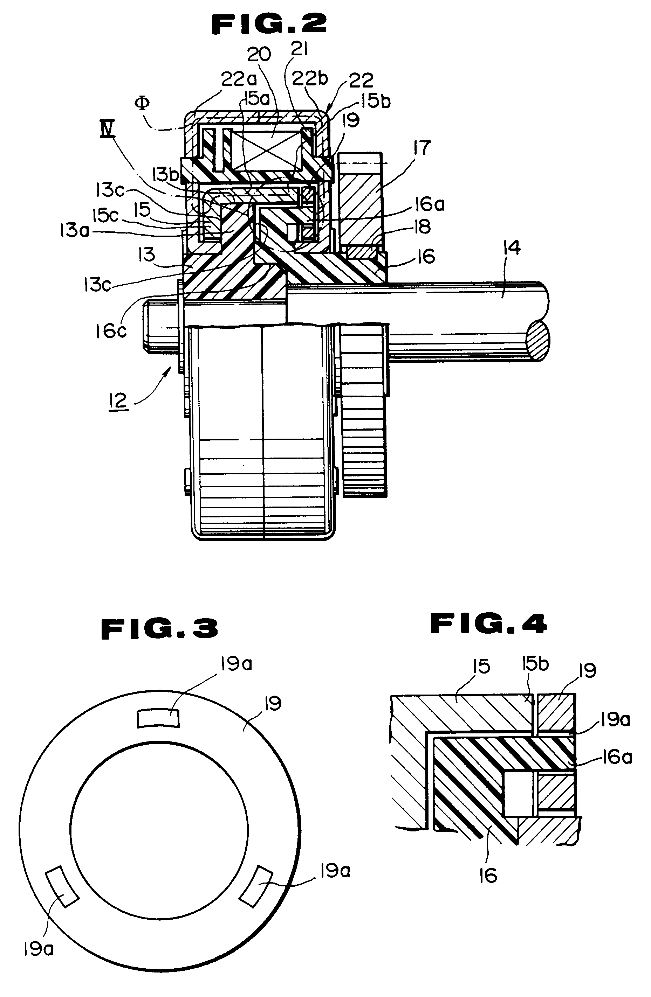

Fig. 2 depicts an electromagnetic microclutch in accordance with the present invention. The electromagnetic clutch, generally designated by 12, comprises a hollow rotor hub 13 having an axis of rotation and formed of a non-magnetic material such as synthetic resin. The hollow portion of the rotor hub 13 is of a D-shaped cross section, so that the forward end of an output shaft 14 of an appliance can be inserted in and securely fixed to it. The rotor hub 13 has a radially outwardly extending flange portion 13a having an outer peripheral surface 13b and a pair of opposite end surfaces 13c, and an annular rotor 15 of an L-shaped cross-section is securely mounted around the flange portion 13a for rotation therewith. The rotor 15 has a cylindrical wall 15a disposed coaxial with the rotor hub 13 and having a free end 15b and an annular end plate 15c disposed at the other end so as to extend radially inwardly thereof. The rotor 15 is securely fixed to the rotor hub 13 with an inner periphery of the cylindrical wall 15a mated with the outer peripheral surface 13b of the flange portion 13a and with one surface of the end plate 15c mated with one of the opposite end surfaces 13c in such a manner that the free end 15b of the cylindrical wall 15a protrudes from the flange portion 13a of the rotor hub 13.

An armature hub 16 of a non-magnetic material such as synthetic resin is positioned on the right side in Fig. 2 with respect to the rotor hub 13 so as to form a small gap therebetween. The armature hub 16 has a through-hole slightly greater in diameter than the output shaft 14, so that the output shaft 14 is inserted through the hub 16 for rotation relative to the hub 16.

A gear 17 is fitted on the armature hub 16 at one end portion thereof and is securely fixed thereto through a key 18. The other end portion of the armature hub 16 has a plurality of (three) arms 16a of an L-shaped cross-section in circumferentially equally spaced relation to one another, one arm portion of each arm extending axially toward the one end of the armature hub 16. Furthermore, the other end portion of the armature hub 16 is provided with a recess 16c in which one end of the rotor hub 13 is loosely fitted. A ring-shaped armature 19, as best shown in Fig. 3, is supported by the armature hub 16 for rotation therewith and for sliding movement in an axial direction. More specifically, the armature 19 is provided with a plurality of (three) apertures 19a formed therethrough and disposed in circumferentially equally spaced relation to one another, and the axially extending portions of the arms 16a of the armature hub 16 are inserted through the apertures 19a of the armature 19 for allowing sliding axial movement of the armature 19 along the arms 16a. The armature 19 is thus disposed in opposed relation to the free end 15b of the rotor 15 with a small gap formed therebetween.

Furthermore, a coil bobbin 21 of a synthetic resin, which has a coil 20 wound therearound, is disposed around the rotor 15, and an annular yoke 22 is disposed so as to surround the rotor 15, the coil bobbin 21 and the armature 19. The yoke 22 is comprised of a pair of yoke members 22a and 22b of a channel-shaped cross-section which are coupled together to define an annular chamber of a larger channel-shaped cross-section opening radially inwardly, and the coil 20, the rotor 15, the flange portion 13a of the rotor hub 13, the armature 19 and the arms 16a of the armature hub 16 are all housed in the chamber so as to be rotatable relative to the yoke 22. As shown in Fig. 2, the yoke member 22a is disposed adjacent to the rotor 15 with a gap formed therebetween while the yoke member 22b is disposed adjacent to the armature 19 with a gap formed therebetween. Furthermore, the coil bobbin 21 is securely fixed to the yoke members 22a and 22b.

With the above construction, when the gear 17 is rotated by a rotation force transmitted from a motor (not shown) the armature hub 16 and hence the armature 19 are rotated. Then, the coil 20 is energized for magnetizing the yoke members 22a and 22b, and the free end 15b of the rotor 15 acts as a single magnetic pole, so that a magnetic flux passes through the yoke member 22a, the end 15a of the rotor 15, the armature 19, and the yoke member 22b, and then returns to the yoke member 22a, thus forming a magnetic path Φ. The armature 19 is then slid through the arms 16a of the armature hub 16 and is brought into contact with the rotor 15 by magnetic attraction, so that the rotor 15 and the rotor hub 13 and hence the output shaft 14 of the equipment are rotated.

In the electromagnetic clutch as described above, since the end 15a of the rotor 15 serves as a single magnetic pole, the construction of the magnetic circuit can be simplified. Therefore, the electromagnetic clutch can be manufactured easily with high precision and at reduced cost. In addition, inasmuch as the rotor 15 and the armature 19 are disposed inside the coil 20, the axial length of the electromagnetic clutch 12 can be reduced substantially, so that the clutch can be easily mounted in any automation equipment.

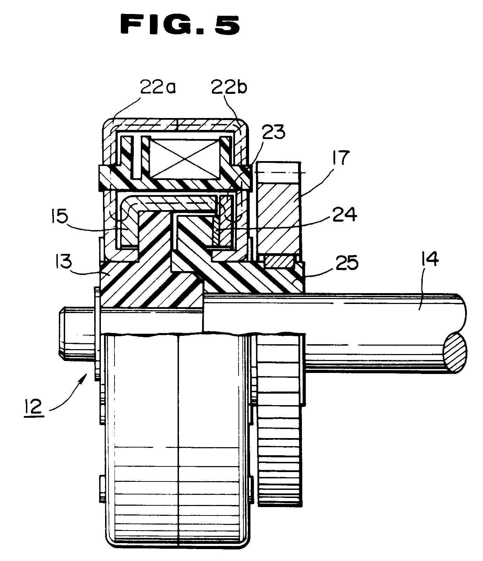

Fig. 5 illustrates a modified electromagnetic clutch 12 in accordance with the invention, which differs from the above embodiment only in that a ring-shaped armature 23 is securely fixed to an armature hub 25 through a resilient member in the form of an annular spring plate 24. The spring plate 24 retains the armature 23 for rotation with the armature hub 25 and resiliently urges the armature 23 away from the end 15b of the cylindrical wall 15a of the rotor 15. This embodiment exhibits the same effect as in the previous embodiment.

While the electromagnetic clutches according to the present invention have been specifically shown and described herein, many modifications are still possible in light of the above teachings. For example, the output shaft 14 of the equipment may be mounted to the armature hub 16, 25 while the gear 17 may be secured to the rotor hub 13.

## Claims

1. An electromagnetic clutch comprising a rotor (15) having an axis of rotation and having a cylindrical wall (15a) extending axially thereof, a coil (20), an armature (19,23), and a yoke (22); said rotor (15), said armature (19,23) and said yoke (22) being arranged to form a magnetic path (Φ) so that when said coil (20) is energized, said armature (19,23) is electromagnetically attracted to said rotor (15);
wherein an armature hub (16,25) is rotatably disposed so as to be coaxial with said rotor (15), said armature (19,23) being disposed in opposed relation to one axial end (15b) of the cylindrical wall (15a) of said rotor (15) and being supported by said armature hub (16,25) for rotation therewith, said coil (20) being disposed around said cylindrical wall (15a) of said rotor (15), said one axial end (15b) of said cylindrical wall (15a) of said rotor (15) serving as a single magnetic pole for forming said magnetic path (Φ);
the armature (19,23) being supported on the armature hub (16,25) so as to be moveable, in response to magnetic attraction, towards and away from said one end (15b) of said cylindrical wall (15a) of said rotor (15);
characterised in that;
the yoke (22) encloses the cylindrical wall (15a) and the armature (19,23) both circumferentially and axially, so that an axial line through said one end (15a) of the cylindrical wall (15a) intersects the yoke (22) beyond each axial end of the cylindrical wall.

2. An electromagnetic clutch according to claim 1, in which said armature (19) is supported by said armature hub (16) for sliding movement therealong.

3. An electromagnetic clutch according to claim 2, in which said armature (19) includes a plurality of apertures (19a) formed therethrough, said armature hub (16) including a plurality of arms (16a) extending axially thereof and inserted through said apertures (19a) of said armature (19) for allowing sliding movement of said armature (19) along said arms (16a).

4. An electromagnetic clutch according to claim 1, further comprising a resilient member (24) securely fixed between said armature (23) and said armature hub (25) for retaining said armature (23) for rotation with said armature hub (25) and for resiliently urging said armature (23) away from said one end (15b) of said cylindrical wall (15a) of said rotor (15).

5. An electromagnetic clutch according to claim 1, further comprising a rotor hub (13) on which said rotor (15) is securely mounted, said rotor hub (13) and said armature hub (16; 25) being both made of a non-magnetic material.

6. An electromagnetic clutch according to claim 5, in which said yoke (22) is comprised of a pair of annular yoke members (22a and 22b) coupled together to define a chamber in which said coil (20), said rotor (15) and said armature (19; 23) are housed, one of said yoke members (22a) being disposed adjacent to said rotor (15) with a gap formed between said one yoke member (22a) and said rotor (15), while the other yoke member (22b) is disposed adjacent to said armature (19; 23) with a gap formed between said other yoke member (22b) and said armature (19; 23).

7. An electromagnetic clutch according to claim 6, further comprising a coil bobbin (21) around which said coil (20) is wound, said bobbin (21) being securely fixed to said yoke (22).

## Patentansprüche

1. Elektromagnetische Kupplung, umfassend einen Rotor (15) mit einer Rotationsachse und einer sich davon axial erstreckenden zylindrischen Wand (15a), eine Spule (20), einen Anker bzw. Läufer (19,23), und ein Joch (22); wobei der Rotor (15), der Anker (19,23) und das Joch so angeordnet sind, daß sie einen magnetischen Pfad (Φ) bilden, sodaß, wenn die Spule (20) mit Energie versorgt wird, der Anker (19,23) elektromagnetisch an den Rotor (15) angezogen wird;
worin eine Ankernabe (16,25) drehbar angeordnet ist, um mit dem Rotor (15) koaxial zu sein, wobei der Anker (19,23) in gegenüberliegender Beziehung zu einem axialen Ende (15b) der zylindrischen Wand (15a) des Rotors (15) angeordnet ist und von der Ankernabe (16,25) zur Drehung damit getragen wird, wobei die Spule (20) um die zylindrische Wand (15a) des Rotors (15) angeordnet ist, wobei ein axiales Ende (15b) der zylindrischen Wand (15a) des Rotors (15) als ein Einzelmagnetpol zur Bildung des magnetischen Pfades (Φ) dient;
wobei der Anker (19,23) auf der Ankernabe (16,25) abgestützt ist, sodaß er in Reaktion auf magnetische Anziehung zum und vom einen Ende (15b) der zylindrischen Wand (15a) des Rotors (15) beweglich ist;
dadurch gekennzeichnet, daß
das Joch (22) die zylindrische Wand (15a) und den Anker (19,23) sowohl am Umfang als auch axial umschließt, sodaß eine axiale Linie durch das eine Ende (15a) der zylindrischen Wand (15a) das Joch (22) jenseits jedes axialen Endes der zylindrischen Wand schneidet.

2. Elektromagnetische Kupplung nach Anspruch 1, worin der Anker (19) von der Ankernabe (16) zur Gleitbewegung da entlang getragen wird.

3. Elektromagnetische Kupplung nach Anspruch 2, worin der Anker (19) eine Vielzahl von durch ihn hindurch gebildeten Öffnungen (19a) umfaßt, wobei die Ankernabe (16) eine Vielzahl von Armen (16a) umfaßt, die sich axial davon erstrecken und durch die Öffnungen (19a) des Ankers (19) eingesetzt sind, um die Gleitbewegung des Ankers (19) entlang der Arme (16a) zu erlauben.

4. Elektromagnetische Kupplung nach Anspruch 1, weiters umfassend ein elastisches Element (24), das fest zwischen dem Anker (23) und der Ankernabe (25) befestigt ist, um den Anker (23) zur Rotation mit der Ankernabe (25) zurückzuhalten und um den Anker (23) elastisch vom einen Ende (15b) der zylindrischen Wand (15a) des Rotors (15) weg zu drängen.

5. Elektromagnetische Kupplung nach Anspruch 1, wieters umfassend eine Rotornabe (13), auf der der Rotor (15) fest montiert ist, wobei sowohl die Rotornabe (13) als auch die Ankernabe (16;25) aus nichtmagnetischem Material hergestellt sind.

6. Elektromagnetische Kupplung nach Anspruch 5, worin das Joch (22) aus einem Paar ringförmiger Jochelemente (22a und 22b) besteht, die miteinander verbunden sind, um eine Kammer zu definieren, worin die Spule (20), der Rotor (15) und der Anker (19;23) beherbergt sind, wobei eines der Jochelemente (22a) benachbart zum Rotor (15) mit einem zwischen dem einen Jochelement (22a) und dem Rotor (15) ausgebildeten Spalt angeordnet ist, während das andere Jochelement (22b) benachbart zum Anker (19;23) mit einem zwischen dem anderen Jochelement (22b) und dem Anker (19;23) ausgebildeten Spalt angeordnet ist.

7. Elektromagnetische Kupplung nach Anspruch 6, weiters umfassend einen Spulenkern (21), um den die Spule (20) gewickelt ist, wobei der Kern (21) fest am Joch (22) fixiert ist.

## Revendications

1. Embrayage électromagnétique comprenant un rotor (15) possédant un axe de rotation et présentant une paroi cylindrique (15a) s'étendant axialement de celui-ci, une bobine (20), une armature (19, 23) et une culasse (22) ; ledit rotor (15), ladite armature (19, 23) et ladite culasse (22) étant disposées pour former un trajet magnétique (Φ) de sorte que lorsque ladite bobine (20) est excitée, ladite armature (19, 23) est attirée électromagnétiquement vers ledit rotor (15) ;
dans lequel un moyeu d'armature (16, 25) est disposé de façon rotative pour être coaxial avec ledit rotor (15), ladite armature (19, 23) étant disposée suivant une relation opposée à une extrémité axiale (15b) de la paroi cylindrique (15a) dudit rotor (15) et étant supportée par ledit moyeu d'armature (16, 25) en vue d'une rotation avec celui-ci, ladite bobine (20) étant disposée autour de ladite paroi cylindrique (15a) dudit rotor (15), ladite extrémité axiale (15b) de ladite paroi cylindrique (15a) dudit rotor (15) servant de pôle magnétique unique pour former ledit trajet magnétique (Φ) ;
l'armature (19, 23) étant supportée sur le moyeu d'armature (16, 25) de façon à être déplaçable, en réponse à l'attraction magnétique, vers et au loin de ladite extrémité (15b) de ladite paroi cylindrique (15a) dudit rotor (15) ;
caractérisé en ce que :
la culasse (22) enferme la paroi cylindrique (15a) et l'armature (19, 23) à la fois circonférentiellement et axialement de façon qu'une ligne axiale à travers ladite extrémité (15b) de la paroi cylindrique (15a) coupe la culasse (22) au-delà de chaque extrémité axiale de la paroi cylindrique.

2. Embrayage électromagnétique selon la revendication 1, dans lequel ladite armature (19) est supportée par ledit moyeu d'armature (16) pour un mouvement coulissant le long de celui-ci.

3. Embrayage électromagnétique selon la revendication 2, dans lequel ladite armature (19) comprend une pluralité d'ouvertures (19a) ménagées à travers celle-ci, ledit moyeu d'armature (16) incluant plusieurs bras (16a) s'étendant axialement de celui-ci et qui sont insérés à travers lesdites ouvertures (19a) de ladite armature (19) pour permettre un mouvement coulissant de ladite armature (19) le long desdits bras (16a).

4. Embrayage électromagnétique selon la revendication 1, comprenant en outre un élément élastique (24) fixé solidement entre ladite armature (23) et ledit moyeu d'armature (25) afin de retenir ladite armature (23) pour la rotation avec ledit moyeu d'armature (25) et pour solliciter élastiquement ladite armature (23) au loin de ladite extrémité (15b) de ladite paroi cylindrique (15a) dudit rotor (15).

5. Embrayage électromagnétique selon la revendication 1, comprenant en outre un moyeu de rotor (13) sur lequel ledit rotor (15) est monté fixement, ledit moyeu de rotor (13) et ledit moyeu d'armature (16 ; 25) étant réalisés tous les deux en un matériau non-magnétique.

6. Embrayage électro-magnétique selon la revendication 5, dans lequel ladite culasse (22) est constituée d'une paire d'éléments annulaires de culasse (22a et 22b) accouplés pour définir une chambre dans laquelle ladite bobine (20), ledit rotor (15) et ladite armature (19 ; 23) sont logés, un desdits éléments de culasse (22a) étant disposé pour être adjacent audit rotor (15) en laissant subsister un espace entre ledit élément de culasse (22a) et ledit rotor (15), tandis que l'autre élément de culasse (22b) est disposé pour être adjacent à ladite armature (19 ; 23) en laissant subsister un espace entre ledit autre élément de culasse (22b) et ladite armature (19, 23).

7. Embrayage électromagnétique selon la revendication 6, comprenant en outre une armature de la bobine (21) autour de laquelle ladite bobine (20) est enroulée, ladite armature de bobine (21) étant montée fixement sur ladite culasse (22).
